# EUROPÄISCHE PATENTSCHRIFT

(11) **EP 1 091 458 B1**
(45) Veröffentlichungstag und Bekanntmachung des Hinweises auf die Patenterteilung: **30.08.2006**
(21) Anmeldenummer: 00120334.8
(22) Anmeldetag: 16.09.2000
(51) Int. Cl.: H01R 35/02, H02G 11/00

(54) **Verfahren zur Herstellung eines Gehäuses für eine elektrische Verbindungseinrichtung zwischen gegeneinander drehbaren Teilen**
Process for manufacturing a housing for an electrical connecting device between two parts rotating relatively to each other
Procédé de fabrication d'un boîtier pour un dispositif de connexion électrique entre deux parties tournant l'une par rapport à l'autre

(30) Priorität: 09.10.1999 DE 19948724
(43) Veröffentlichungstag der Anmeldung: 11.04.2001
(73) Patentinhaber: Delphi Technologies Inc., Troy, MI 48007 (US)
(72) Erfinder: Rudolph, Gerd, 55459 Aspisheim (DE); Stute, Klaus, 55126 Mainz (DE)
(74) Vertreter: Becker, Bernd

(56) Entgegenhaltungen:
- EP-B- 0 417 350
- DE-C- 4 404 408
- JP-U- 2 139 876
- US-A- 5 637 005
- US-A- 5 692 915

## Beschreibung

Die Erfindung bezieht sich auf ein Verfahren zur Herstellung eines Gehäuses für eine elektrische Verbindungseinrichtung zwischen gegeneinander drehbaren Teilen, insbesondere zwischen Lenkrad und Lenksäule, mit einem feststehenden Gehäuseteil und einem dazu verdrehbaren Gehäuseteil, die jeweils eine Anschlußeinheit tragen und einen spiralförmig aufgewickelten, jeweils endseitig mit den Anschlußeinheiten verbundenen flexiblen elektrischen Leiter umschließen, wobei die inneren axialen Begrenzungsflächen der Gehäuseteile mit einem Vlies als Dämmstoff versehen werden.

Stromleitungsverbinder dieser Art werden insbesondere zur Herstellung einer elektrischen Verbindung zwischen einer Stromquelle und einer in der Lenkradschüssel angeordneten Gas-Aufprall-Schutzeinrichtung von Kraftfahrzeugen eingesetzt. Hierbei weist ein zwischen dem feststehenden Gehäuseteil und dem dazu verdrehbaren Gehäuseteil angeordnetes Leiterband eine solche Länge auf, daß es den beidseitig etwa drei Umdrehungen betragenden Lenkradausschlag zu folgen vermag, wobei sich das federnde Leiterband während des Lenkradausschlages aus einer mittleren Lage in der einen Richtung bis zur Anlage an dem stationären Gehäuse nach außen aufweitet und in der anderen Richtung bis zur Anlage an dem verdrehbaren Gehäuseteil nach innen zusammenzieht. Hierbei gibt allerdings das Leiterband bei der normalen Lenkradbewegung Kratzgeräusche und bei plötzlichen starken Erschütterungen, wie etwa in Kurven oder beim Fahren in unebenem Gelände, starke Klappergeräusche ab, die vorwiegend durch das Aneinanderschlagen der Windungen des Leiterbandes verursacht werden.

Die EP-B-0 417 350 offenbart einen Stromleitungsverbinder zur Überbrückung von Leitungsunterbrechungen zwischen gegeneinander drehbaren Teilen, insbesondere zwischen Lenkrad und Lenksäule. Der Stromleitungsverbinder besteht aus einem mit einem Leiterabgang versehenen Gehäuse mit Deckel als an der Lenksäule befestigbarer Stator und einem in dem Gehäuse drehbar gelagerten und ebenfalls mit einem Leiterabgang versehenen, mit dem Lenkrad verbundenen Rotor. Das Gehäuse und der Deckel begrenzen einen den Rotor umgebenden Ringraum, der der Aufnahme eines den Rotor in mehreren Windungen umschlingenden, in den Leiterabgängen endenden Leiterbandes dient. Um eine Geräuschentwicklung des Leiterbandes zu vermindern, sind die dem isolierten Leiterband zugewandten Seiten des Bodens des Gehäuses und des Deckels jeweils mit einer Beschichtung aus einem textilen Dämmstoff versehen. Als problematisch erweist sich hierbei die Befestigung des textilen Dämmstoffes auf den entsprechenden Flächen des Gehäuses und des Deckels, die in der Regel aus Kunststoff gefertigt sind. Klebstoffe, die den Kunststoff des Gehäuses und des Deckels leicht anlösen und somit eine gute Verbindung mit dem Dämmstoff schaffen, beeinträchtigen häufig die textilen Strukturen des Dämmstoffes, wodurch dieser in seinen Dämmeigenschaften negativ beeinträchtigt ist. Die Verwendung anderer Klebstoffe zur Festlegung des Dämmstoffes an den zugeordneten Flächen des Gehäuses und des Deckels, hingegen stellt eine langandauernde Verbindung nicht sicher. Ferner ist das Aufkleben des Dämmstoffes auf die entsprechenden Flächen des Gehäuses und des Deckels sehr arbeitsaufwendig und somit kostenintensiv.

Im Weiteren zeigt die DE 44 04 408 Cl einen Stromleitungsverbinder zur Überbrückung von Leiterunterbrechungen zwischen gegeneinander drehbaren Teilen, insbesondere zwischen Lenkrad und Lenksäule, bestehend aus einem Gehäuse mit einem einen Leiterabgang aufweisenden, an der Lenksäule befestigbaren Stator und einen mit dem Lenkrad drehbaren, ebenfalls mit einem Leiterabgang versehenen Rotor. Ein den Rotor umgebender Ringraum dient zur Aufnahme eines den Rotor in mehreren Windungen umschlingenden, in den Leiterabgängen endenden Leiterbandes. Der Stator und/oder der Rotor des Gehäuses sind ganz oder teilweise mit einer Beschichtung aus weichplastischem Material versehen. Der Stator und der Rotor weisen jeweils entlang dreier radialer Linien Durchbrechungen auf, und die Beschichtung ist derart durch die Durchbrechungen durchgespritzt, dass auf der den Gehäuseinnenraum bildenden Seite radiale Rippen gebildet sind, an denen sich das Leiterband mit seinen unteren bzw. oberen Kanten lose anlegt.

Es ist Aufgabe der Erfindung, ein Verfahren der eingangs genannten Art zu schaffen, mit dem eine gegenüber dem Stand der Technik verbesserte Anbringung des Vlieses sichergestellt ist.

Erfindungsgemäß wird die Aufgabe dadurch gelöst, daß das Vlies bei der Fertigung der Gehäuseteile auf den inneren axialen Begrenzungsflächen der Gehäuseteile teilweise umspritzt wird, wobei die dem Leiter zugewandten Flächen des Vlieses nicht mit Kunststoff umhüllt werden.

Bei der Fertigung der Gehäuseteile mittels dieses Verfahrens dringt die Schmelze des Kunststoffes, aus dem die Gehäuseteile spritzgegossen werden, in die entsprechenden Randbereiche des Vlieses ein und bettet dessen Fasern ein. Hierdurch entsteht eine homogene Verbindung zwischen dem schalldämmenden Vlies und den entsprechenden Flächen der Gehäuseteile, die eine relativ lange Haltbarkeit der Schalldämmung gewährleistet. Des Weiteren wird die Schalldämmung relativ kostengünstig ohne kostenintensive Handarbeit erreicht.

Um zusätzliche Werkzeugkosten zu vermeiden, wird zweckmäßigerweise das Vlies vor dem Spritzgußvorgang zur Ausformung der Gehäuseteile in eine entsprechende Negativform eingelegt. Das Einlegen des Vlieses erfolgt hierbei beispielsweise unter der Verwendung allgemein bekannter Handhabungsgeräte.

Bevorzugt wird das Vlies aus Textil- oder Kunststofffasern hergestellt. Diese Fasern werden relativ gut in den Kunststoff der Gehäuseteile eingebettet, weshalb eine sichere Verbindung zwischen dem Gehäuseteil und den zugeordneten Vlies gewährleistet ist. Ferner halten sowohl die Textil- als auch die Kunststofffasern den Beanspruchungen durch den Leiter stand.

Es versteht sich, daß die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im Folgenden anhand eines Ausführungsbeispieles unter Bezugnahme auf die zugehörigen Zeichnungen näher erläutert. Es zeigen:
- Fig.1: einen Längsschnitte durch ein nach dem erfindungsgemäßen Verfahren hergestelltes Gehäuse einer elektrischen Verbindungseinrichtung,
- Fig.2: einen Schnitt durch die Darstellung nach Fig. 1 gemäß der Linie II-II und

Die elektrische Verbindungseinrichtung umfaßt ein Gehäuse 1, das aus einem in einem Lenkstockschaltergehäuse 2 festgelegten Gehäuseteil 3 und einem mit einem nicht dargestellten Lenkrad in Verbindung stehenden, dazu verdrehbaren Gehäuseteil 4 besteht, wobei das Lenkstockschaltergehäuse 2 mitsamt dem daran festgelegten Gehäuseteil 3 an einem Mantelrohr einer Lenksäule angeordnet ist. Die beiden Gehäuseteile 3, 4 und das Lenkstockschaltergehäuse 2 bilden einen hohlen Ringraum 5 zur Aufnahme eines flexiblen elektrischen Leiters 6, der in mehreren Windungen um eine Nabe 7 des Gehäuseteils 4 spiralförmig aufgewickelt ist. Die inneren axialen Begrenzungsflächen 8 der Gehäuseteile 3, 4 sind mit einem Dämmstoff 9 versehen, an dem der Leiter 6 anliegt, der jeweils endseitig mit einer dem feststehenden Gehäuseteil 3 bzw. dem verdrehbaren Gehäuseteil 4 zugeordneten Anschlußeinheit 10 in Verbindung steht. Die Gehäuseteile 3, 4 bestehen aus Kunststoff und werden im Spritzgußverfahren gefertigt.

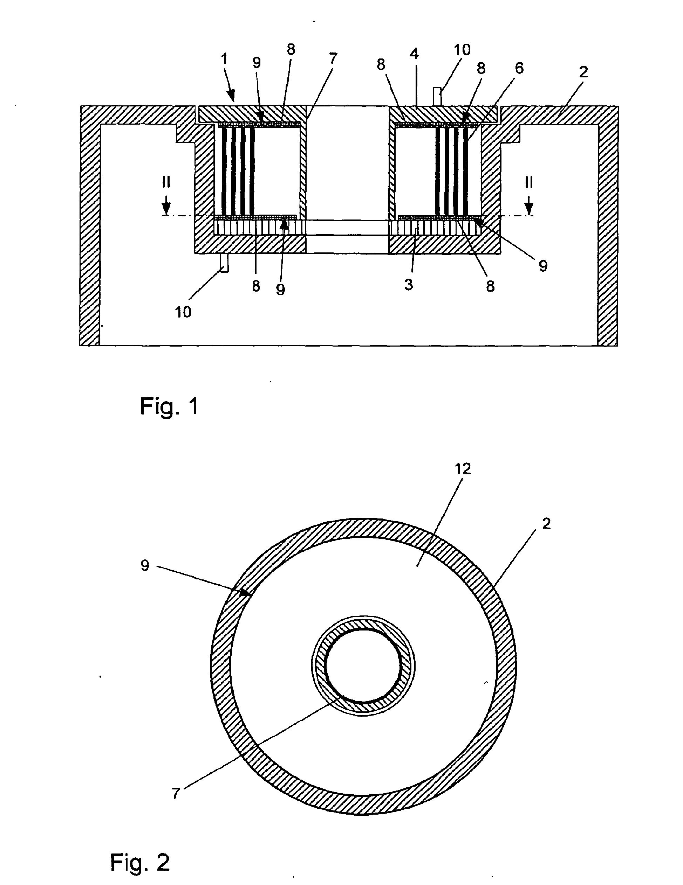

Bei der Darstellung nach Fig. 2 findet als Dämmstoff 9 ein Vlies 12 Verwendung, das aus Textil- bzw. Kunststofffasern hergestellt wird. Das Vlies 12 wird vor dem Spritzgießen des jeweiligen Gehäuseteiles 3 bzw. 4 an der Stelle, die die innere axiale Begrenzungsfläche 8 des Gehäuseteiles 3 bzw. 4 repräsentiert, in eine entsprechende Negativform eingelegt. Beim Spritzgießen des Gehäuseteiles 3 bzw. 4 wird das Vlies 12 teilweise umspritzt, wobei die dem Leiter 6 zugewandte Fläche des Vlieses 12 nicht mit Kunststoff umhüllt wird. Durch das Umspritzen des Vlieses 12 wird eine dauerhafte Befestigung desselben an der zugeordneten Begrenzungsfläche 8 erzielt, ohne daß die schalldämmenden Eigenschaften des Vlieses 12 hierbei beeinträchtigt werden.

## Patentansprüche

1. Verfahren zur Herstellung eines Gehäuses (1) für eine elektrische Verbindungseinrichtung zwischen gegeneinander drehbaren Teilen, insbesondere zwischen Lenkrad und Lenksäule, mit einem feststehenden Gehäuseteil (3) und einem dazu verdrehbaren Gehäuseteil (4), die jeweils eine Anschlußeinheit (10) tragen und einen spiralförmig aufgewickelten, jeweils endseitig mit den Anschlußeinheiten (10) verbundenen flexiblen elektrischen Leiter (6) umschließen, wobei die inneren axialen Begrenzungsflächen (8) der Gehäuseteile (3, 4) mit einem Vlies (12) als Dämmstoff (9) versehen werden, **dadurch gekennzeichnet, daß** das Vlies (12) bei der Fertigung der Gehäuseteile (3, 4) auf den inneren axialen Begrenzungsflächen (8) der Gehäuseteile (3, 4) teilweise umspritzt wird, wobei die dem Leiter (6) zugewandten Flächen des Vlieses (12) nicht mit Kunststoff umhüllt werden.

2. Verfahren nach Anspruch 1, **dadurch gekennzeichnet, daß** das Vlies (12) vor dem Spritzgußvorgang zur Ausformung der Gehäuseteile (3, 4) in eine entsprechende Negativform eingelegt wird.

3. Verfahren nach Anspruch 1 oder 2, **dadurch gekennzeichnet, daß** das Vlies (12) aus Textil-oder Kunststoffasern hergestellt wird.

## Claims

1. Method for the manufacture of a housing (1) for an electrical connecting device between counter-rotatable parts, in particular between steering wheel and steering column, with a stationary housing portion (3) and a housing portion (4) rotatable relative thereto, which in each case carry a terminal unit (10) and surround a spirally wound flexible electrical conductor (6) in each case terminally connected to the terminal units (10), the inner axial boundary surfaces (8) of the housing portions (3, 4) being provided with a non-woven fabric (12) as insulating material (9), **characterised in that** during manufacture of the housing portions (3, 4) the non-woven fabric (12) is partially applied to the inner axial boundary surfaces (8) of the housing portions (3, 4) by injection moulding, the surfaces of the non-woven fabric (12) facing towards the conductor (6) not being encased in plastic.

2. Method according to claim 1, **characterised in that** the non-woven fabric (12) is laid in a corresponding negative mould before the injection-moulding operation to form the housing portions (3, 4).

3. Method according to claim 1 or 2, **characterised in that** the non-woven fabric (12) is made from textile or plastic fibres.

## Revendications

1. Procédé de fabrication d'un boîtier (1) pour un dispositif de connexion électrique entre des éléments aptes à tourner l'un par rapport à l'autre, en particulier entre un volant de direction et une colonne de direction, avec une partie de boîtier fixe (3) et une partie de boîtier (4) rotative par rapport à celle-ci, lesquelles portent chacune un module de connexion (10) et entourent un conducteur électrique flexible (6) enroulé en spirale, connecté à chacune de ses extrémités aux modules de connexion (10), les surfaces de délimitation intérieures axiales (8) des parties de boîtier (3, 4) étant garnies d'un non-tissé (12) faisant fonction de matériau isolant (9), **caractérisé en ce que**, lors de la fabrication des parties de boîtier (3, 4), le non-tissé (12) est déposé sur une partie des surfaces de délimitation intérieures axiales (8) des parties de boîtier (3, 4), les surfaces du non-tissé (12) tournées vers le conducteur (6) n'étant pas revêtues de matière plastique.

2. Procédé selon la revendication 1, **caractérisé en ce que**, avant l'opération de moulage par injection visant à façonner les parties de boîtier (3, 4), le non-tissé (12) est placé dans un moule négatif correspondant.

3. Procédé selon la revendication 1 ou 2, **caractérisé en ce que** le non-tissé (12) est réalisé en fibres textiles ou artificielles.
